# EUROPÄISCHE PATENTSCHRIFT

(11) **EP 1 587 202 B1**
(45) Veröffentlichungstag und Bekanntmachung des Hinweises auf die Patenterteilung: **26.11.2008**
(21) Anmeldenummer: 05007011.9
(22) Anmeldetag: 31.03.2005
(51) Int. Cl.: H02J 7/00, H01M 10/44

(54) **Verfahren und Vorrichtung zum Laden eines Akkumulators**
Method and device for charging a battery
Méthode et appareil pour charger une batterie

(30) Priorität: 14.04.2004 DE 102004018179
(43) Veröffentlichungstag der Anmeldung: 19.10.2005
(73) Patentinhaber: Jungheinrich Aktiengesellschaft, 22047 Hamburg (DE)
(72) Erfinder: Maasland, Hans-Hermann, Dipl.-Ing., 25451 Quickborn (DE)
(74) Vertreter: Hauck Patent- und Rechtsanwälte

(56) Entgegenhaltungen:
- EP-A- 0 565 303
- EP-A- 0 856 931
- DE-A1- 4 439 785

## Beschreibung

Die vorliegende Erfindung betrifft ein Verfahren zum Laden eines Akkumulators sowie ein zur Durchführung dieses Verfahrens geeignetes Ladegerät.

In der Praxis sind zwei Grundtypen von Ladeverfahren für Akkumulatoren bekannt. Bei einer sogenannten IuIa-Ladung erfolgt eine Anfangsladung mit einem konstanten Strom. Erreicht die aufzuladende Zelle ihre Gasungsspannung (2,4 Volt) wird die Aufladung in einer Nachladephase mit einer konstanten Spannung weitergeführt, wobei der Ladestrom stark fällt. In der zweiten Ladephase gelangt die Batterie nicht in die Gasungsphase. Hierdurch wird ein hoher Wirkungsgrad und eine niedrige Batterieerwärmung erzielt, es tritt jedoch die sogenannte Säureschichtung auf, die die Wirksamkeit des Akkumulators beeinträchtigt.

Bei der sogenannten W-Ladung wird von dem Ladegerät ein Anfangsladestrom bereitgestellt, der sich im Laufe des Ladevorgangs vermindert. Allerdings wird bei der Ladung der Batterie die Gasungsspannung überschritten, so daß eine große Erwärmung der Batterie und ein starker Wasserverbrauch auftreten können.

DIN 41774 "Halbleiter-Gleichrichtergeräte mit W-Kennlinie für das Laden von Bleiakkumulatoren" vom November 1987 gibt Grenzwerte für den Ladestrom abhängig von der Batteriespannung vor. Die oberen Grenzwerte der W-Kennlinie sind durch die folgenden drei Wertepaare definiert:

100 % Geräte-Nennstrom bei 2V pro Zelle, 50% des Geräte-Nennstroms bei Gasungsspannung von 2,4V pro Zelle und 25% des Geräte-Nennstroms bei 2,65V pro Zelle. Ferner gibt die DIN-Vorschrift an, daß das Ladegerät ausgelegt sein muß, um dauerhaft mit 80 % des Nennstroms belastet werden zu können.

EP 0 565 303 A2 ist ein Verfahren zum Aufladen von Akkumulatoren bekannt, bei dem eine Pulsladung über das Erreichen der Gasungsspannung hinaus erfolgt, um durch die aufsteigenden Gasblasen eine Durchmischung der Elektrolyte zu erzielen.

Aus DE 33 28 994 C1 ist ein Verfahren zum Laden von Akkumulatoren bekannt, bei dem in einer ersten Ladephase der Akkumulator bis zur Gasungsspannung aufgeladen wird, und in einer zweiten Ladephase eine weitere Aufladung mit einer verringerten Stromstärke erfolgt, wobei in der zweiten Ladephase der Stromwert zwischen einem höheren und einem niedrigeren Wert umgeschaltet wird. Dieses Verfahren wird auch als Pulsladung in der Nachladephase bezeichnet. Die Maximalwerte für den Ladestrom sind bei der Pulsladung so gewählt, daß diese oberhalb der Gasungsspannung für die Batterie liegen, so daß eine Säureschichtung verhindert wird, da durch die auftretende Gasung eine gute Durchmischung des Elektrolyten erfolgt. In der Nachladephase sind die niedrigeren Werte des Ladestroms so gewählt, daß die Batteriespannung unterhalb der Gasungsspannung liegt, so daß eine übermäßige Erwärmung und Wasserzersetzung in dem Akkumulator vermieden wird.

Aus DE 198 33 096 C2 ist ein Verfahren zum Laden eines Akkumulators bekannt, das den Effekt der Elektrolytdurchmischung durch eine sogenannte Ausgleichsladung mit einem periodischen Umschalten des Ladestroms von einem ersten auf einen zweiten Wert über die Zeitdauer von mehr als 12 Stunden erzielt. In dieser Zeit erfolgt eine Überladung mit ungefähr 5 bis 10 % der zuvor entnommenen Strommenge.

Aus DE 101 28 637 A1 ist ein Batterieladeverfahren bekannt, bei dem in einer ersten Ladephase ein konstanter Ladestrom anliegt bis die Batteriespannung die Gasungsspannung erreicht hat. In dem nachfolgenden zweiten Ladezyklus erfolgt eine Pulsladung, wobei hier periodisch zwischen zwei Ladestromwerten umgeschaltet wird. Die Gasungsspannung liegt hierbei zwischen den Spannungswerten, die sich bei der Pulsladung einstellen.

Der vorliegenden Erfindung liegt die Aufgabe zugrunde, ein Verfahren und eine Vorrichtung zum Laden von Akkumulatoren bereitzustellen, das bzw. die eine effektive Ladung des Akkumulators bei einer kurzen Ladezeit und einer minimalen Auslegung der Ladevorrichtung erlaubt.

Erfingdungsgemäß wird die Aufgabe durch ein Verfahren mit den Merkmalen aus Anspruch 1 und durch eine Vorrichtung mit den Merkmalen aus Anspruch 5 gelöst. Vorteilhafte Ausgestaltungen bilden den Gegenstand der Unteransprüche.

Bei dem erfindungsgemäßen Ladeverfahren wird ein Ladestrom an den zu ladenden Akkumulator angelegt. Wenn die Batteriespannung einen vorbestimmten Spannungswert überschritten hat, der kleiner als der Gasungsspannungswert ist, erfolgt eine Pulsladung, bei der der Ladestrom für eine vorbestimmte Zeitdauer mehrfach, vorzugsweise periodisch, mit vorbestimmten zeitlichen Abständen erhöht wird. Die Erhöhung des Ladestroms erfolgt derart, daß ein vorbestimmter Wert für den Ladestrom im Mittel nicht überschritten wird. Wenn die Batteriespannung die Gasungsspannung erreicht hat, wird in eine Nachladephase umgeschaltet. Die Nachladephase kann, wie bereits aus dem Stand der Technik bekannt, durchgeführt werden. Der besondere Vorteil dieses Verfahrens liegt darin, daß die Hauptladezeit, also die Zeit bis zum Erreichen der Gasungsspannung, durch die Pulsladung verkürzt wird. Die Pulsladung dient bei der vorliegenden Erfindung also dazu, die Stromzeitfläche während der Hauptladephase zu vergrößern. Erfindungsgemäß wird die Nachladephase erst dann umgeschaltet, wenn die Batteriespannung die Gasungsspannung bei nicht erhöhtem Stromwert überschreitet. Es versteht sich, daß der gepulste Ladestrom ebenfalls zu einer gepulsten Spannung führt, so daß auch die Batteriespannung einen pulsförmigen Verlauf mit erhöhten Spannungswerten besitzt. Die Bedingung zum Umschalten in die Nachladephase liegt dann vor, wenn der niedrigere der Spannungswerte die Gasungsspannung überschreitet.

In einer bevorzugten Weiterbildung des erfindungsgemäßen Verfahrens sind während der Pulsladungsphase Dauer und/oder Amplitude der Ladestrompulse derart gewählt, daß die Temperatur eines Ladegeräts unterhalb einer vorgegebenen Temperatur bleibt. Bevorzugt wird während der Pulsladungsphase der Mittelwert des Ladestroms auf ungefähr 80 % des Nennstroms eingestellt. Indem der Mittelwert des Ladestroms nicht mehr als 80 % beträgt, wird die Bedingung aus DIN 41774 erfüllt, daß das Ladegerät dauerhaft mit mindestens 80 % des Nennstroms belastet werden kann. Es wird also zum Schutz der Batterie und des Ladegeräts sichergestellt, daß während der Pulsladung die wirksame Belastung für die passiven Bauteile des Ladegeräts nicht zu groß ist.

Die Erfindung betrifft ebenfalls ein Ladegerät zur Durchführung des erfindungsgemäßen Ladevorgangs, das einen Transformator besitzt, der für ungefähr 80 % des Nennstroms ausgelegt ist. Durch das Einbringen der erhöhten Ladestrompulse in der Hauptladephase wird ein solcher Transformator ausgelastet, aber nicht dauerhaft überlastet. Der Transformator und weitere passive Bauteile des Ladegeräts sind derart ausgelegt, daß bei 80 % des Nennstroms die nach Isolationsklasse ausgelegte Temperaturgrenze in der Beharrungstemperatur nicht überschritten wird.

Das erfindungsgemäße Verfahren wird nachfolgend anhand eines Diagramms näher erläutert.

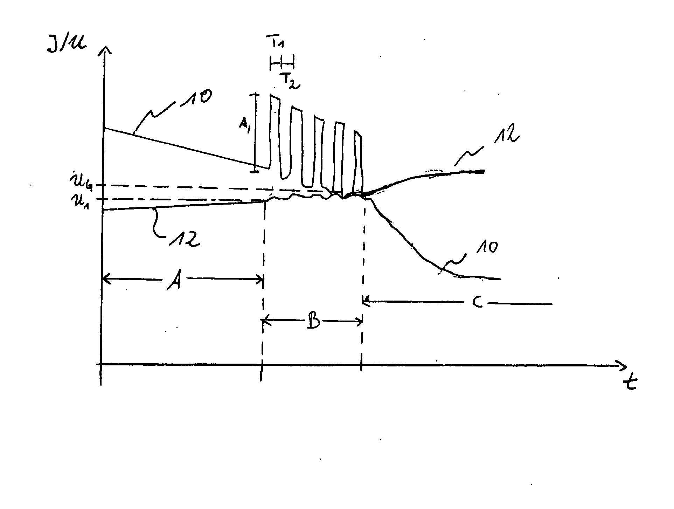

Die einzige Figur zeigt, in geglätteter Form, den zeitlichen Verlauf des Ladestroms 10. Der Ladestrom 10 fällt in einem ersten Zeitintervall A ungefähr linear ab. Bei realen Messungen treten hierbei selbstverständlich Schwankungen und Spitzen auf.

Im gleichen Intervall steigt die Spannung der Batterie 12 von einem Ausgangswert bis zu einem ersten Spannungswert U1. Bei einer 24V-Batterie kann der Spannungswert beispielsweise 26,2V betragen. Wichtig ist jedoch, daß dieser Spannungswert unterhalb der Gasungsspannung liegt, als beispielsweise unter 28,8V. Mit Erreichen des ersten Spannungswertes U1 beginnt der Teil der Hauptladephase B, in dem eine Pulsladung erfolgt. Bei der Pulsladung wird der Ladestrom in seinem Wert um die Größe A erhöht. Der erhöhte Stromwert liegt über ein Zeitintervall T1 an, wobei selbstverständlich auch während dieses Zeitintervalls der Ladestrom aufgrund der erfolgten Ladung der Batterie abfällt. Hierbei können auch wieder Schwankungen und Spitzen im zeitlichen Verlauf des Ladestroms auftreten. Für die nachfolgende Zeitdauer T2 wird der Ladestrom wieder um den Wert A abgesenkt. In einer bevorzugten Ausgestaltung des erfindungsgemäßen Verfahrens entspricht T1 der Dauer von T2, so daß ein Tastverhältnis von 0,5 vorliegt, bei dem in der Hälfte der Zeit der erhöhte Ladestrom eingeschaltet ist und in der anderen Hälfte der erhöhte Ladestrom ausgeschaltet ist. Während der Pulsladephase B steigt die Batteriespannung weiter an. Wenn der niedrigste Wert in einem Intervall die Gasungsspannung (also beispielsweise 28,8V bei einer 24V-Batterie mit 12 Zellen) erreicht wurde, so beginnt die Nachladephase C.

Experimente mit einem Ladegerät haben gezeigt, daß bei einer Batteriespannung von U = 2,18V pro Zelle und einem Tastverhältnis von 0,5 die Beharrungstemperatur am Transformator bei einer Messung nach DIN unterschritten wird. Hierbei entspricht die Gleichrichterauslegung 100 % des Nennstromwertes und wird bei der Gegenspannung der Batterie nicht erreicht.

In der Nachladephase dargestellt ist ein fallender Wert für den Ladestrom, wobei die Batteriespannung ansteigt und sich einem Maximalwert nähert.

Bei dem erfindungsgemäßen Verfahren erfolgt die Bilanzierung des Ladestroms wie im Stand der Technik. Aus der Figur wird deutlich, daß durch die Verwendung der Pulsladung während der Hauptladephase die Stromzeitfläche vergrößert wird, so daß die Hauptladezeit um etwas weniger als eine Stunde verkürzt wird.

## Patentansprüche

1. Verfahren zum Laden eines Akkumulators, insbesondere mit flüssigem Elektrolyt, mit folgenden Schritten:
- ein Ladestrom (10) wird an den zu ladenden Akkumulator angelegt,
- wenn die Batteriespannung (12) einen vorbestimmten ersten Spannungswert (U1) überschritten hat,
-- erfolgt eine Pulsladung, bei der der Ladestrom wiederholt für eine vorbestimmte Zeitdauer (T1) um eine Größe (A) erhöht und
-- anschließend für eine vorbestimmte Zeitdauer (T2) um die Größe (A) abgesenkt wird,
--- wobei die Erhöhung des Ladestromwertes derart erfolgt, dass ein vorbestimmter Wert für den Ladestrom im Mittel nicht überschritten wird
--- und der Ladestromwert während der Zeitdauer (T1) mit einem erhöhten Ladestromwert aufgrund der erfolgten Ladung der Batterie abfällt
- wenn der niedrigste Wert der Batteriespannung während der Pulsladung einen zweiten Spannungswert bei dem abgesenkten Stromwert erreicht hat,
wird in eine Nachladephase (C) umgeschaltet,
- wobei der erste Spannungswert (U 1) kleiner als der zweite Spannungswert und der zweite Spannungswert die Gasungsspannung (UG) ist.

2. Verfahren nach Anspruch 1, **dadurch gekennzeichnet, daß** während der Pulsladung die Dauer und Amplitude der Ladestrompulse derart gewählt sind, daß die Temperatur des Ladegeräts unterhalb eines vorgegebenen Temperaturwertes bleibt.

3. Verfahren nach Anspruch 1 oder 2, **dadurch gekennzeichnet, daß** während der Pulsladung der Mittelwert des Ladestroms 80% oder weniger des Nennstroms beträgt.

4. Ladegerät zur Durchführung des Verfahrens nach einem der Ansprüche 1 bis 3, **gekennzeichnet durch** einen Transformator, der für 80% des Nennstroms im Dauerbetrieb ausgelegt ist.

5. Ladegerät nach Anspruch 4, **dadurch gekennzeichnet, daß** der Transformator des Ladegeräts derart ausgelegt sind, daß bei 80 % des Nennstroms eine vorbestimmte Maximaltemperatur nicht überschritten wird.

## Claims

1. A method for charging a battery, in particular with a liquid electrolyte, with the following steps:
- a charging current (10) is applied to the battery to be charged
- when the battery voltage (12) has exceeded a predetermined first voltage value (U1)
-- a pulse charging occurs, in which the charging current is increased by an amount (A) repeatedly for a predetermined duration (T1) and
-- is subsequently lowered by an amount (A) for a predetermined duration (T2)
--- wherein the increase of the charging current value occurs such that a predetermined value for the charging current is not exceeded on average
--- and the charging current value declines during the time duration (T1) with an increased charging current value due to the charging of the battery that has occurred
- when the lowest value of the battery voltage during the pulsed charging has reached a second voltage value at the lowered current value,
a post charging phase (C) is switched to
- wherein the first voltage value (U1) is smaller than the second voltage value, and the second voltage value is the voltage of the gassing point (UG).

2. The method according to Claim 1, **characterized in that** during the pulsed charging the duration and amplitude of the charging current pulses are selected such that the temperature of the charging device remains below a predetermined temperature value.

3. The method according to Claim 1 or 2, **characterized in that** during the pulsed charging the mean value of the charging current amounts to 80% or less of the nominal current.

4. A charging device for performing the method according to one of the Claims 1 to 3, **characterized by** a transformer that is designed for 80% of the nominal current in continuous operation.

5. The charging device according to Claim 4, **characterized in that** the transformer of the charging device is designed such that at 80% of the nominal current a predetermined maximum temperature is not exceeded.

## Revendications

1. Méthode pour charger une batterie, en particulier avec un électrolyte liquide, comprenant les étapes suivantes:
- un courant de charge (10) est appliqué à la batterie à charger,
- lorsque la tension de batterie (12) a dépassé une première valeur de tension prédéfinie (U1),
-- une charge par impulsions a lieu avec laquelle le courant de charge est, à plusieurs reprises, augmenté d'une grandeur (A) pour une durée prédéfinie (T1) et
-- ensuite réduit de la grandeur (A) pour une durée prédéfinie (T2),
--- dans laquelle l'augmentation de la valeur de courant de charge a lieu de telle manière qu'une valeur prédéfinie pour le courant de charge en moyenne n'est pas dépassée,
--- et la valeur de courant de charge pendant la durée (T1) avec une valeur de courant de charge élevée diminue en raison de la charge de la batterie effectuée,
- lorsque la valeur la plus faible de la tension de batterie a atteint pendant la charge par impulsions une seconde valeur de tension avec la valeur de courant réduite,
une phase de charge ultérieure (C) est commutée,
- dans laquelle la première valeur de tension (U1) est inférieure à la seconde valeur de tension et la seconde valeur de tension est la tension de dégagement gazeux (UG).

2. Méthode selon la revendication 1; **caractérisée en ce que** pendant la charge par impulsions, la durée et l'amplitude des impulsions de courant de charge sont choisies de telle manière que la température du chargeur reste en-dessous d'une valeur de température prédéfinie.

3. Méthode selon la revendication 1 ou 2, **caractérisée en ce que** pendant la charge par impulsions, la valeur moyenne du courant de charge est de 80 % ou moins du courant nominal.

4. Chargeur pour exécuter la méthode selon l'une des revendications 1 à 3, **caractérisé par** un transformateur qui est conçu pour 80 % du courant nominal en fonctionnement continu.

5. Chargeur selon la revendication 4, **caractérisé en ce que** le transformateur du chargeur est conçu de telle manière qu'avec 80 % du courant nominal, une température maximale prédéfinie n'est pas dépassée.
